# EUROPEAN PATENT APPLICATION

(11) **EP 2 330 794 A1**
(43) Date of publication of application: **08.06.2011**
(21) Application number: 09306167.9
(22) Date of filing: 01.12.2009
(51) Int. Cl.: H04L 29/08

(54) **Status prompt method and system**

(71) Applicant: France Telecom, 75015 Paris (FR)
(72) Inventor: Nozaki, Hidenari, MATSUDO-SHI CHIBA 2710053 (JP); Zemek, Radim, TOKYO Tokyo 1890013 (JP); Coupe, Patrice, TOKYO 150-0035 (JP)

(57) **Abstract**

A method for managing a user equipment in a social communication network, said user equipment comprising a user networking application, said user networking application comprising a configurable user status for displaying the status of the user to other users in the social communication network, said method comprising the acts of activating a status prompt upon a change of state of the user equipment by the user, receiving a user input of a status, and setting the configurable user status using the received user input.

## Description

### Field of the Invention

The present invention relates in general to telecommunication services and more specifically to user equipment management.

### Background of the Invention

Communication user equipments, in particular mobile phones, are often changed from a state to another like switched on and off or changed from sleep mode to working mode and vice-and-versa. Users have to activate manually the applications they want to use, and in particular for their configuration.

There are many popular services that people post their status, for example, Twitter or Facebook or any instant messenger type of services that allow setting a status. The status allows the user defining his availability or state or mood. For example, status may be "available" or "busy" or "do not disturb" or "back in a minute" or a customized status or sentence such as "I'm angry".

Entering the status does not consume a lot of time. However, it is a voluntary action as the corresponding applications have to be activated (switched-on, reactivated...) and the user has to be active and voluntary enter into each application in order to configure the corresponding status when the user equipment changes from one mode or state to another.

The problem with these services is that people often forget to update their status and when they do, they need to voluntarily act on the user equipment to manage applications.

Today there is no solution to efficiently manage a user equipment when changing from one mode or state to another and thus improving efficiency of such user equipments.

Today there is a need for a user equipment management solution that can be easily implemented on the existing communication infrastructures.

### Summary of Invention

It is an object of the present system to overcome disadvantages and/or make improvement over the prior art.

To that extend, the invention proposes a method for managing a user equipment in a communication network according to claim 1.

The invention also proposes a user equipment according to claim 9.

The invention also proposes a system according to claim 14.

The invention also proposes a readable computer program according to claim 15.

An advantage of the solution is that, when the user equipment changes from a state to another (e.g. from sleep mode to working mode and vice-and-versa), it prompts the user to interact with a social networking application (or social network application or user networking application) in order to configure his status in regard to said social networking application or user networking application.

Another advantage of the invention is that the choice of application may be based on user's preference. The user may choose which social networking application he wants to be status prompted for. And, if the user chooses a plurality of social networking applications to be status prompted for, he may be able to choose in which order he will be status-prompted.

Alternatively a single status prompt may be used by the plurality of social networking applications.

By activating the status prompt upon a change of state, the user will be able to update his status automatically or systematically, so that he does not have to bother with systematically voluntarily thinking of entering the corresponding application(s) to modify his status. In other words, with the method according to the invention, the user will be passive and will not need any voluntary action to go in the social networking application to update his status.

The invention may be used with networking applications such as, for example, Twitter, Facebook, or any Instant Messaging (like e.g. Windows Live Messenger...).

### Brief Description of the Drawings

Embodiments of the present invention will now be described solely by way of example and only with reference to the accompanying drawings, where like parts are provided with corresponding reference numerals, and in which:
Figure 1 schematically illustrates a system according to an embodiment of the present invention;
Figure 2 schematically illustrates a method according to an embodiment of the present invention;
Figure 3a schematically illustrates a user equipment according to an embodiment of the present invention;
Figure 3b schematically illustrates a user equipment according to an embodiment of the present invention.

### Description of Preferred Embodiments

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, devices etc..., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, operating system and applications in a user equipment, and routers, servers, nodes, gateways or other entities in a social communication network are not detailed as their implementation is beyond the scope of the present system and method.

Unless specified otherwise, the exemplary embodiment will be described hereafter in its application to a user equipment of a social communication network.

In addition, it should be expressly understood that the drawings are included for illustrative purposes and do not represent the scope of the present system.

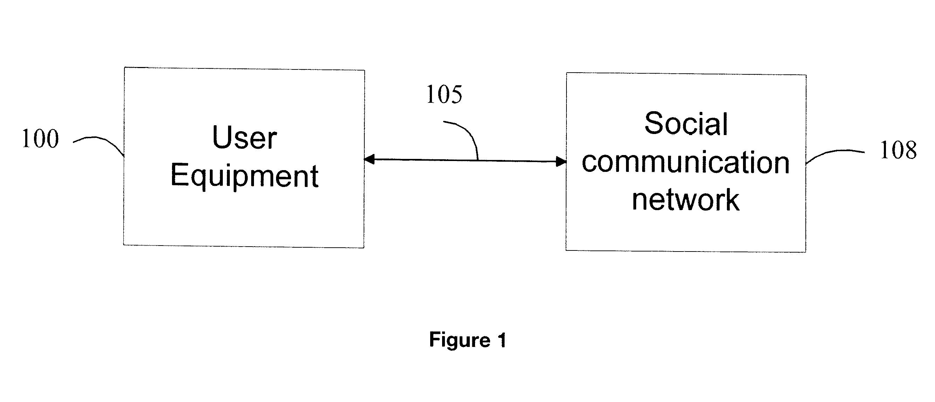

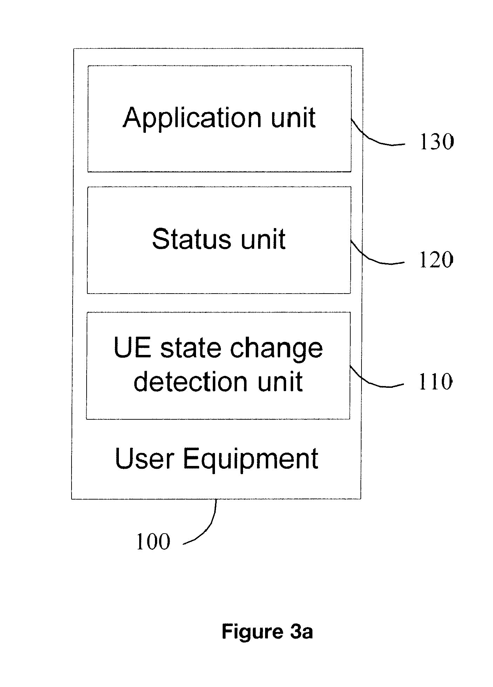

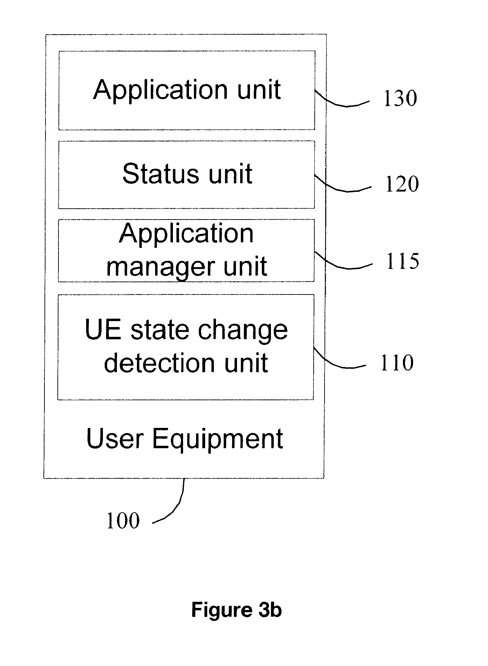

Figure 1 describes a system according to the invention. A user equipment 100 may communicate via a link 105 in a communication network 108. The system, for managing a user equipment 100 in a social communication network 108, comprises a social communication network 108, and, as described here under in reference to Figure 3a and 3b, a user equipment 100 comprising a user networking application. The user networking application comprises a configurable user status for displaying the status of the user to other users in the social communication network 108. The user equipment 100 is operable to activate a status prompt upon a change of state of the user equipment by the user, receive a user input of a status, and set the configurable user status using the received user input.

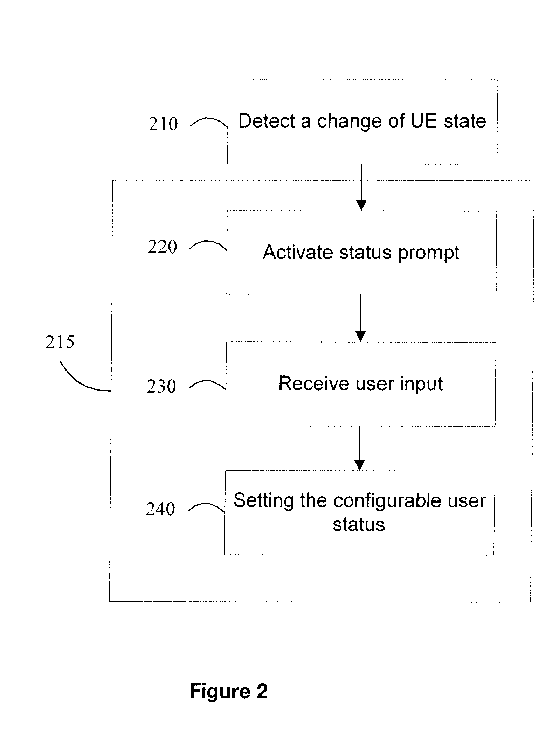

Figure 2 describes an illustrative embodiment of the method according to the invention. The method allows managing a user equipment in a social communication network. The user equipment comprises a user networking application. The network application comprises a configurable user status for displaying the status of the user to other users in the social communication network.

First, a change of state of the user equipment triggered by the user is detected in act 210 as described here under. Then, during the act 215 of completing the change of state, a status prompt is activated in act 220. Then, a user input of a status is received in act 230. The configurable user status is set using the received user input in act 240. Then, the user equipment 100 may, for example, switch to its usual home screen or the screen the user left off before the user equipment went to sleep mode or got shut off.

In the method according to the invention, the change of state may be an activation of the user equipment. When the change of state is an activation of the user equipment, the activation of the user equipment may correspond for example to switching-on the user equipment or to an activation of the user equipment from the sleep mode. For instance, when switching-on or waking-up from sleep mode, the user equipment displays a status prompt to ask the user to update his status for one or a plurality of social networking application. In this case, the status prompt is displayed after activating the user equipment to enter in running state or mode from switched-off or idle/sleep mode (e.g. after pressing the on button or touching the screen or a key) and before the user may interact with the user interface to act on other functions or applications of the user equipment. In other words, the user status input received in act 230 is the first interaction the user may have with the user equipment subsequent to the trigger of change of state of said user equipment.

The change of state may also be a deactivation of the user equipment. In this case, the deactivation of the user equipment may correspond for example to switching-off the user equipment or to a deactivation of the user equipment to the sleep mode. When switching-off or going into sleep mode, the user equipment displays a status prompt to ask the user to update his status for one or a plurality of social networking application. In this case, the status prompt is displayed after activating the user equipment toward switching-off state or mode or toward idle state or mode (e.g. after pressing the off button or not touching the screen or a key for some time) and before the user equipment enters said switching-off state or mode or toward idle state or mode.

The user equipment may comprise a plurality of networking applications. In this case, the status prompt may allow at once the configuration of all the configurable user status of the plurality of networking applications. In other words, a single status prompt may be activated in order to set or configure each configurable user status for all networking applications. In an alternative embodiment, the status prompt may also allow a different configuration for each of the configurable user status of each networking application. In other words, a plurality of status prompts may be used, for example one status prompt per networking application. In this case, in an optional embodiment, it may be possible for the user to configure his user's preferences. The user's preferences may allow selecting the order in which the status prompts of the plurality of networking applications is displayed or which status prompt of the plurality of networking applications may be displayed.

Figures 3a and 3b describe a user equipment according to the invention. The user equipment is in a social communication network and comprises a user networking application. The user networking application comprises a configurable user status for displaying the status of the user to other users in the social communication network. The user equipment is operable to detect a change of state of the user equipment triggered by the user and complete the change of state. The act of completing the change of state comprises activating a status prompt, receiving a user input of a status, and setting the configurable user status using the received user input.

As described in Figure 3a, the user equipment 100 may comprise a state change detection unit 110 operable to change the state of the user equipment by the user, a status unit 120 operable to activate a status prompt upon a change of state of the user equipment by the user and receive a user input of a status, and an application unit 130 operable to set the configurable user status using the received user input. The state change detection unit 110 handles the change of state request or trigger from the user.

The status unit may be managed by the operating system (OS) of the user equipment. In such a case, the OS may be configured to activate the status prompt. An OS uses processes to control, and in particular to trigger, applications. A process is a software that performs some action and may be controlled by a user, by other applications or by the operating system. It is processes, rather than applications, that the operating system controls and schedules for execution by the Central Processing Unit (CPU). The operating system allows the application to begin running, suspending the execution only long enough to deal with interrupts and user input. The UE state change unit detection 110 is configured for the user of the user equipment to change its state, for example from sleep mode to running mode or vice-and-versa, for instance, by pressing a on-off button or a key or touching a screen or waiting to go into idle mode etc... The UE state change unit detection 110 is also configured for completing the change of state of the user equipment. Upon changing its state, the OS , which may be part of the UE state change unit detection 110, runs a process that launches a status prompt program. The status prompt program may be a piece of software stored in the status unit 120. The status prompt program may be created for instance using an Application Program Interface (API). The status prompt program allows displaying a status prompt for asking the user to input his status for display to other users of the social communication network. The status prompt receives the input of the user and communicates it to the application unit 130. The application unit 130 allows storing networking applications. The input of the user is used by the application unit 130 to set the configurable user status of networking applications. The configurable user status is the status of the user that is displayed to other users in the social communication network 108. In the method according to the invention, the configurable user status of networking applications may be set or stored (act 240 in reference to Figure 2) during the completion of the change of state. It may be applied either in real time in the networking application(s) of the application unit 130 if said network application(s) is/are running (i.e. activated) or may be stored in the application unit 130 for further use by the network applications when they will be activated.

In an alternative embodiment, the status unit 120 may also managed by the application unit 130. In this case, the OS or the UE state change unit 110 may send a command to the application unit 130 to launch the status prompt program stored in the status unit 120. The status prompt program allows displaying a status prompt for asking the user to input his status for display to other users of the social communication network. The status prompt receives the input of the user and communicates it to the application unit 130. The application unit 130 allows storing networking applications. The input of the user is used by the application unit 130 to either store or apply the configurable user status of networking applications. The configurable user status is the status of the user that is displayed to other users in the social communication network 108.

In an alternative embodiment of the user equipment as described in Figure 3b, the user equipment 100 may further comprise an application manager operable 115 to manage the status unit 120 and/or the application unit 130. In this case, the OS or the UE state change unit 110 may send a command to the application manager unit 115 to launch the status prompt program stored in the status unit 120. The application manager unit 115 may then send command messages to the status unit 120 and/or to the application unit 130 to launch the status prompt program. The status prompt program allows displaying a status prompt for asking the user to input his status for display to other users of the social communication network. The status prompt receives the input of the user and communicates it to the application unit 130. The application unit 130 allows storing networking applications. The input of the user is used by the application unit 130 to set the configurable user status of networking applications. The configurable user status is the status of the user that is displayed to other users in the social communication network 108.

In an alternative embodiment, some of the user networking applications stored as clients on the user equipment 100 and remotely managed by a remote application server in the social communication network 108. The input of the user received in act 230 (in reference to Figure 2) may then be sent by the application unit 130 to the remote application server for subsequent display of the status of the user to the other users of the social communication network 108.

As opposed to existing solutions where a status prompt is displayed by the networking application, in the user equipment according to the invention, the status prompt is displayed upon request from the operating system. The status prompt may be displayed upon request from the operating system to either:
- the status unit 120 directly or in this case the operating system manages the status unit 120,
- the application manager unit 115 that further requests the status unit 120 or,
- the application unit 130 t that further requests the status unit 120.

### Use cases

- Alice is waiting for a bus. She notices that her bus is late. So, she is going to check RSS reader for any latest news. She touches a key to reactivate her phone. The phone shows a twitter application for her to enter her current status as she set her reactivation prompt to twitter. After updating her status, she starts reading RSS feeds.
- People turn off their mobile phones before some event that should not be interrupted by calls; for example, meetings, conferences, movie theaters, wedding ceremonies, and so on. What many people do is to update their user status before the event, and then they turn off their mobiles. However, people often forget to do the update, but they do not forget to turn off their phones as it is more crucial than updating the status. To bridge that gap between these two actions is this solution. When you turn off your mobile, it prompts you to update your status for your preferred social network services. After the event finishes, when you turn your mobile on, it should also prompt you what is your current status.

A method for managing a user equipment in a communication network, said user equipment comprising at least one user networking application, said at least one user networking application comprising a configurable user status for configuring the status of the user, said method comprising the act of activating a status reactivation prompt upon activation of the user equipment, said status reactivation prompt being configured to set up (the configuration of) the configurable user status (or allowing the configuration of the configurable user status).

A method for managing a user equipment in a communication network, said user equipment comprising a user networking application, said networking application comprising a configurable status for configuring the application, said method comprising the act of activating a configuration prompt upon activation of the user equipment, said configuration prompt allowing the configuration of the configurable status.

A method for managing a user equipment in a communication network, said user equipment comprising a user networking application, said networking application comprising a configurable status for configuring the application, said method comprising the act of activating a configuration prompt upon deactivation of the user equipment, said configuration prompt allowing the configuration of the configurable status.

A user equipment in a social communication network, said user equipment comprising a user networking application, said user networking application comprising a configurable user status for displaying the status of the user to other users in the social communication network, said user equipment being operable to:
- activate a status prompt upon a change of state of the user equipment by the user,
- receive a user input of a status,
- set the configurable user status using the received user input.

A user equipment according to claim 9, wherein the change of state is an activation of the user equipment.

A user equipment according to claim 10, wherein the activation of the user equipment corresponds to switching-on the user equipment or to an activation of the user equipment from the sleep mode.

A user equipment according to claim 9, wherein the change of state is a deactivation of the user equipment.

A user equipment according to claim 13, wherein the deactivation of the user equipment corresponds to switching-off the user equipment or to an deactivation of the user equipment to the sleep mode.

A user equipment according to any of the preceding claims, wherein the user equipment comprises a plurality of networking applications and wherein the status prompt allows at once the configuration of all the configurable user status of the plurality of networking applications.

A user equipment according to any of the preceding claims 9 to 13, wherein the user equipment comprises a plurality of networking applications and wherein the status prompt allows a different configuration for each of the configurable user status of each networking application.

A user equipment according to claim 15, said user equipment being further operable to configure the user's preferences, said user's preferences allowing selecting the order in which the status prompts of the plurality of networking applications is displayed or which status prompt of the plurality of networking applications may be displayed.

## Claims

1. A method for managing a user equipment in a social communication network, said user equipment comprising a user networking application, said user networking application comprising a configurable user status for displaying the status of the user to other users in the social communication network, said method comprising, for said user equipment, the acts of:
- detecting a change of state of the user equipment triggered by the user,
- completing the change of state,
**characterized in that** the act of completing the change of state comprises:
- activating a status prompt,
- receiving a user input of a status,
- setting the configurable user status using the received user input.

2. A method according to claim 1, wherein the change of state is an activation of the user equipment.

3. A method according to claim 2, wherein the activation of the user equipment corresponds to a switching-on of the user equipment or to an activation of the user equipment from the sleep mode.

4. A method according to claim 1, wherein the change of state is a deactivation of the user equipment.

5. A method according to claim 4, wherein the deactivation of the user equipment corresponds to switching-off the user equipment or to an deactivation of the user equipment to the sleep mode.

6. A method according to any of the preceding claims, wherein the user equipment comprises a plurality of networking applications and wherein the status prompt causes the user equipment to configure at once the configuration of all the configurable user status of the plurality of networking applications.

7. A method according to any of the preceding claims 1 to 5, wherein the user equipment comprises a plurality of networking applications and wherein the status prompt allows a different configuration for each of the configurable user status of each networking application.

8. A method according to claim 7, said method further comprising a preliminary act of configuring the user's preferences, said user's preferences allowing selecting the order in which the status prompts of the plurality of networking applications is displayed or which status prompt of the plurality of networking applications may be displayed.

9. A user equipment, said user equipment comprising:
- a user equipment state change detection unit 110, said user equipment state change detection unit 110 being operable to detect a change of state of the user equipment triggered by the user and complete the change of state,
- a status unit 120, said status unit 120 being operable to activate a status prompt and receive a user input of a status,
- an application unit 130, said application unit 130 being operable to set the configurable user status using the received user input.

10. A user equipment according to claim 9, wherein the status unit 120 is managed by the operating system of the user equipment.

11. A user equipment according to claim 9, wherein the status unit 120 is managed by the application unit 130.

12. A user equipment according to claim 9, said user equipment further comprising an application manager 115, said application manager 115 being operable to manage the status unit 120 and/or the application unit 130.

13. A user equipment according any of the preceding claims 9 to 12, said user equipment being operable to carry out a method according to any one of claims 1 to 8.

14. A system for managing a user equipment in a social communication network, said system comprising:
- a social communication network,
- a user equipment, said user equipment comprising a user networking application, said user networking application comprising a configurable user status for displaying the status of the user to other users in the social communication network, said user equipment being operable to:
- detect a change of state of the user equipment triggered by the user,
- complete the change of state,
**characterized in** the user equipment is further operable to:
- activate a status prompt,
- receive a user input of a status,
- set the configurable user status using the received user input.

15. A computer-readable medium having computer-executable instructions to enable a computer system to perform the method of any one of claims 1 to 8.
